# EUROPEAN PATENT APPLICATION

(11) **EP 2 493 243 A2**
(43) Date of publication of application: **29.08.2012**
(21) Application number: 12169501.9
(22) Date of filing: 14.06.2006
(51) Int. Cl.: H04W 36/32

(54) **Terminal mobility measure at connection setup**

(30) Priority: 20.06.2005 SE 0501411
(62) Divisional of application: 06747916.2
(71) Applicant: Teliasonera AB, 106 63 Stockholm (SE)
(72) Inventor: Ernström Per, 117 50 Stockholm (SE)
(74) Representative: Löfgren, Håkan Bengt Alpo

(57) **Abstract**

A cellular radio communications system comprises a cellular communications network and at least one mobile terminal. The terminal is provided with determining and reporting means for determining the mobility of the terminal and reporting the determined terminal mobility to said network at a call or connection setup for said terminal. In a method for establishing a call or connection setup in such a communications system the mobility of the terminal is determined and reported to said network at a call or connection setup for use for decisions for the establishment of the call or connection setup.

## Description

### Technical Field

The present invention relates to a cellular radio communications system comprising a cellular communications network and at least one mobile terminal, as well as to a method for establishing a call or connection setup in the system.

### Background

For many decisions which have to be taken in cellular networks, e.g. handover decisions, choice of radio bearer configurations, redirection decisions, it is important to know how mobile the terminal is or how fast the terminal is moving.

FR 2 781 959 describes communication between a stationary and a mobile station in a communications network, e.g. of a type of communications network utilizing the European standard "Digital Enhanced Cordless Telecommunication", DECT. From the mobile station a.o. its mobility is communicated to the base station to inform the base station of the mobile station's capacity of supporting mobility depending services.

US 5 623 535 discloses operation of a cellular communications system based on mobility and teletraffic statistics representative of a typical operation of a mobile unit in the system. The mobile unit processes and collects the statistics and transmits aggregate statistics to the base station on certain occasions to improve the efficiency of the communications system. Cells are directed to micro or macro cells depending on a specific mobility measure - averaged sojourn time - and call handling within the communications system is prioritised.

US 5 987 319 describes a cell setup method in a digital cellular radio communications system, wherein a plurality of parameters defining the current state of the system, a.o. expected motilities of mobile stations, is determined. These parameters are combined into a communication resource request and the communication resource that best matches the request may be allocated. This document is focused on the resource decision itself and does not disclose in detail how different parameters are obtained, neither how the parameters are signalled in the system.

In US 2004/0152465 a method of optimizing the performance of a mobile terminal in a telecommunications network by using captured travelling speed of the terminal is described. The captured travelling speed can also be transmitted to a base station of the network to be utilized for improving reception at the base station side and at the mobile terminal.

When a mobile terminal has had a connection ongoing for some time, the network can estimate the terminal mobility, based on the past behaviour, e.g. variations in radio link quality, handovers performed, etc.

A problem at the moment of a call or connection setup is, however, that the network has not yet any viable measure of mobility. It takes some time to collect statistics on how a mobile terminal behaves to create such a measure.

A cellular network based on a Hierarchical Cell Structure, HCS, is built of two or more cell layers. The lowest layer, called the macro cell layer, consists of large cells, and is used to build coverage and good mobility. The higher layer or layers, the micro or pico cell layers, consist of smaller cells and are built for capacity, where there is a high demand. The different cell layers need not necessarily be built on the basis of the same radio technology. As an example, the macro layer could be built on the basis of Global Service Mobile, GSM, the micro layer could be based on UMTS, and the pico layer could consist of Wireless Local Area Network, WLAN, hotspots. If the cell structures are based on different Radio Access Technologies, RAT:s, inter RAT mobility, viz. handover and cell reselection, is, however, needed.

At a call or connection setup the network has to decide if the terminal shall be redirected (or a quick handover shall be made) to another cell because of e.g. congestion. If, however, the network redirects a fast moving terminal to a micro or pico layer of a HCS as described above this may result in a call setup failure or call dropping. A fast moving terminal shall preferably be connected to the macro layer to get enough time for performing handover. The time for transversing a cell is on the average proportional to the size of the cell and inversely proportional to the velocity of the terminal. If a fast moving terminal is connected to the micro or pico layers, it may not have time enough to identify and measure neighbour cell signals, report them to the network, and get a handover command in return before it has moved out of the coverage of the current cell. As a consequence thereof the call may be dropped. On the other hand, a terminal, which is not moving or is moving slowly, should preferably be connected to a micro or pico layer, where large capacities are available.

The network also has to decide what kind of resources to allocate and different resources may be more or less vulnerable to high mobility. In e.g. UMTS a dedicated channel using soft handover has very good mobility properties, while a common resource based on e.g. High Speed Packet Downlink Access, HSDPA, is more vulnerable to mobility. Therefore, if a radio bearer based on HSDPA is allocated to a fast moving terminal, very bad performance and delays may result.

Generally a radio bearer optimized to have good mobility and macro diversity properties requires the use or at least coordination of radio resources in more than one cell and under more than one antenna site. As a consequence thereof scheduling of cell resources among different terminals in a cell is slowed down for such a radio bearer. Furthermore, the application of radio resources saving Hybrid Automatic Repeat reQuest ,HARQ, methods in combination with macro diversity techniques introduces serious data transport delays and latencies. Conversely radio bearer optimized for radio efficient transport of packet data through the use of fast scheduling and HARQ with low delays can not in an optimal way make use of fast mobility and macro diversity techniques.

Furthermore, it has to be decided by the network whether to accept, reject or renegotiate a request for a radio bearer with a certain Quality of Service, QoS, requirements. QoS, achievable bitrates, delays, etc. often depend on terminal mobility and speed. If a request for a radio access bearer with high QoS requirements is accepted by the network for a fast moving terminal, this may lead to a radio access bearer failure.

The purpose of the present invention is to solve the above discussed problems related to call and connection setup in a cellular communication network when no viable information about the mobility of the terminal in question is available to the network.

### Disclosure of the Invention

This purpose is obtained by a cellular radio communications system and a method of the kind defined in the introductory portion of the description which have the characterizing features of claim 1 and claim 10 respectively.

Thus the invention is based on a terminal mobility estimation which is signalled to the network at call or connection setup. According to the invention the terminal determines its mobility and reports it to the cellular communications network at a connection setup. This timing is vital since this information is particularly needed by the network for decisions for the establishment of the call or connection setup until the network has collected sufficient statistics to make its own estimate of the terminal mobility characteristics.

The network is adopted to allocate a radio bearer of a type sacrificing fast mobility and macro diversity properties to enable the user of fast HARQ and/or fast scheduling of cell resources among the terminals in the cell to a terminal with low terminal mobility, while said network is adopted to allocate a radio bearer of a type sacrificing the use of fast HARQ and of fast scheduling of cell resources among the terminals in the cell to enable fast mobility and macro diversity properties to a terminal with high terminal mobility.

According to an advantageous embodiment of the invention this information is used by the network as a basis for one or more of the following decisions, viz. handover decisions, choice of radio bearer configuration, redirection decisions, decisions on resource allocations.

As appears from the discussion above it is previously known to measure the mobility of a terminal and this is per se no part of the invention. Terminal mobility measurements are thus already known but these measured motilities are only used for modifying the terminal behaviour. In the idle mode the terminal can measure e.g. the number of cell reselections during a certain period of time, whereupon a decision whether to make a cell reselection to a different cell layer or not is based on this measured mobility. In UMTS for example the terminal is considered as "fast moving" or in "high mobility state" when more than N_{CR} cell reselections are made during a time period of length T_{CRmax}, N_{CR} and T_{CRmax} denoting system information broadcast parameters. Depending on its state of mobility the UMTS terminal prioritizes HCS layers differently in the cell reselection process. Thus in this case the terminal mobility estimate is not a velocity estimate.

If a measure of the terminal mobility is used in idle mode, the same measure can be reused and reported to the network for the use described above. Alternatively, a separate measure of mobility can of course be used for this purpose.

Since the mobility measure is needed only early in the connection setup phase, it is important not to use too many bits for the coding of the mobility measure for the reporting to the network. Thus, according to advantageous embodiments of the system according to the invention the determining and reporting means are adapted to report just one bit to said network indicating whether the terminal mobility in question is above or below a predetermined level. In this way the amount of data transferred is reduced to a minimum at a call or connection setup. This predetermined level may be fixed or constant, or it may be a varying system information broadcast parameter, which may be different in different cells of said network. In case of a cellular network having a hierarchical cell structure of two or more cell layers, the broadcast parameter may be different for different cell layers. The broadcast parameter may also be varying in time depending on the cell loading.

If message sizes allows, it is of course possible to use more bits for a more precise coding of the mobility measure.

According to still another advantageous embodiment of the system according to the invention the network is adapted to allocate a radio bearer based on High Speed Downlink Packet Access, HSDPA, for a low terminal mobility and a good radio link and to allocate, for a high terminal mobility, a dedicated radio bearer based on a dedicated channel, DCH, regardless of the quality of the radio link. With a very "mobility safe" DCH and because of the soft handover mechanism a high bitrate can then be achieved even on the cell edge. HSDPA, on the other hand, can give very high bitrates in a very efficient way, viz, by using few resources, when the radio link is good. When the radio link is bad at the cell edge, however, performance goes down and handover may create serious delays. Thus, by using the mobility information, the network can for a low mobility terminal with a good radio link, estimated e.g. on the basis of downlink output power, allocate a radio bearer based on HSDPA and for a high mobility terminal allocate a radio bearer based on a DCH. Thus according to the invention an optimal type of channel is allotted.

### Description of Embodiments of the Invention

In UMTS for example the terminal is considered as "fast moving" or in "high mobility state" when more than N_{CR} cell reselections are made during a time period of length T_{CRmax}, N_{CR} and T_{CRmax} denoting system information broadcast parameters. Thus in this case the terminal mobility estimate is not a velocity estimate. One single bit can be used to report whether the terminal is in "high mobility state" or not, the idle mode high mobility trigger level N_{CR} being reused. Alternatively, a separate level N_{REPORT} can be used to define high mobility for reporting purposes, or if more bits are available the full number of cell reselections during the time period T_{Crmax} can be reported. More advanced mobility measures can of course also be created.

The reporting can be included as a new information element, IE, in one or more Radio Resource Control, RRC, messages, in the
- RRC connection request message
- Initial direct transfer message
- Uplink direct transfer

Obviously it is an advantage if the network obtains the mobility information as early as possible to enable quick and accurate decisions and to avoid delays, especially for redirection purposes. From this point of view the best solution is to include the mobility measure in RRC connection request message which is the first message sent. However, this message is always sent on Radio Access Channel, RACH, and the space is very limited. The "one bit option" described above is therefore a good choice when the mobility is included in this message.

The RRC connection request message contains an IE called "establishment cause" which contains information of whether the connection is requested for signalling purposes or for setting up an originating and terminating call of a certain QoS class. By combining this information with the information about the terminal mobility and internal network load or congestion information a quick redirection decision can be made by the network and a "RRC connection reject" sent with a "redirection information" IE, informing the terminal to make a new attempt in a different cell on e.g. a different frequency or even using a different RAT, e.g. GSM instead of UMTS.

The Initial Direct Transfer, IDT, message and the Uplink Direct Transfer, UDT, messages are used to carry Non Access Stratum, NAS, messages, i.e. messages from the mobile terminal to the core network. The IDT message is used when no NAS signalling connection has yet been established, and is used also to establish such a connection, while the UDT message is used when a signalling connection has already been established.

The NAS messages carried by the IDT or the UDT RRC message may be a request e.g. to set up a circuit switched call or a packet switched connection with certain QoS requirements.

Since IDT and UDT are sent after RRC connection establishment the RRC connection reject message cannot be used to redirect the terminal. Still, a redirection can be made by instead using the RRC connection release message with a "redirection information" IE. The delay will, however, be longer in this case.

The mobility measure can also be used to decide which kind of radio bearer shall be used for the setup in order to support the QoS required in the most efficient and failure proof way.

As an example the UMTS dedicated channel is very "mobility safe". Because of the soft handover mechanism a high bitrate can be achieved even on the cell edge.

HSDPA, on the other hand, can give very high bitrates in a very efficient way, viz, by using few resources, when the radio link is good. When the radio link is bad at the cell edge, however, performance goes down and handover may create serious delays.

Thus, by using the mobility information, the network can for a low mobility terminal with a good radio link, estimated e.g. on the basis of downlink output power, allocate a radio bearer based on HSDPA, and for a high mobility terminal allocate a radio bearer based on a dedicated channel regardless of the current quality of the radio link.

According to the present invention a measure of the terminal mobility is consequently determined and reported to the cellular communications network for use for improved decisions on e.g. redirections, handover, radio bearer configuration and resource allocations at call and connection setups.

The terminal mobility is reported to the network at call or connection setup. This timing is vital, since this information is particularly needed by the network at the call or connection setup. The terminal mobility information is therefore preferably added to messages sent during the setup.

Furthermore, a number of decisions are taken by the communications network at call and connection setups, like e.g.
- Redirection to a different hierarchical cell layer
- Allocation of a common resource contra dedicated resource
- Acceptance, rejection, renegotiation of a request for a radio bearer with certain QoS requirements to make the call or connection setup optimal, and notably to allocate resources in an optimal way.

The invention is useful for mobile communication services and products for any radio communications technology or combinations of radio technologies for mobile communications, like UMTS, GSM, WLAN, and Code Division Multiple Access, CDMA 2000.

## Claims

1. A cellular radio communications system comprising a cellular communications network and at least one mobile terminal, said terminal being provide with determining and reporting means for determining the moving speed of the terminal and reporting the determined terminal moving speed to said network, **characterized in that** a terminal moving speed measure is included in the RRC connection request message sent at the establishment of said a call or connection setup.

2. System according to claim 1, wherein the terminal moving speed measure is used as a basis for decisions for call or connection setup, **characterized in that** said decisions comprise one or more of the following decisions, viz. handover decisions, choice of radio bearer configuration, redirection decisions, decisions on resource allocations for a call or connection.

3. System according to claims 1 or 2, **characterized in that** said determining and reporting means are adapted to report just one bit to said network indicating whether the terminal moving speed in question is above or below a predetermined level.

4. System according to claim 3, **characterized in that** said predetermined level is constant.

5. System according to claim 3, **characterized in that** said predetermined level is a varying system information broadcast parameter.

6. System according to claim 5, **characterized in that** said broadcast parameter is different in different cells of said network.

7. System according to claim 5, said cellular network having a hierarchical cell structure of two or more cell layers, **characterized in that** said broadcast parameter is different for different cell layers.

8. System according to claims 5 or 6, **characterized in that** said broadcast parameter is varying in time depending on the cell loading.

9. System according to any one of the preceding claims, **characterised in that** said network is adapted to allocate a radio bearer based on High Speed Downlink Packet Access, HSDPA and/or High Speed Uplink Packet Access, HSUPA, for a low terminal moving speed and a good radio link and to allocate, for a high terminal moving speed, a dedicated radio bearer based on a dedicated channel, DCH, regardless of the quality of the radio link.

10. A method for establishing a call or connection setup in a communications system comprising a cellular network and at least one mobile terminal, wherein the moving speed of the terminal is determined and reported to said network, **characterised in that** a terminal moving speed measure is included in the RRC connection request message sent at the establishment of the call or connection setup.

11. Method according to claim 10, wherein the terminal moving speed measure is used as a basis for decisions for call or connection setup, **characterized in that** said decisions comprise one or more of the following decisions, viz. handover decisions, choice of radio bearer configuration, redirection decisions, decisions on resource allocations for a call or connection.

12. Method according to claim 10 or 11, said cellular network having a hierarchical cell structure of two or more cell layers, **characterized in that** cell redirection to different cell layers are preformed depending on the terminal moving speed.

13. Method according to any one of the claims 10 - 12, said terminal being in an idle mode of operation, **characterized in that** the number of cell reselections during a certain period of time is determined as a measure of the terminal moving speed.

14. Method according to any one of the claims 10 - 13, **characterized in that** the terminal moving speed reported to said network is included in an information element of a RRC message containing information about the purpose of the requested connection setup.

15. Method according to claim 14, **characterized in that** said information about terminal moving speed and purpose of requested connection setup is combined with internal network load or congestion information to make a redirection decision for the terminal and send a RRC connection rejection together with said redirection decision asking the terminal to make a new attempt in a different cell.

16. Method according to claim 14, **characterized in that** said information about terminal moving speed and purpose of requested connection setup is combined with internal network load or congestion information to make a redirection decision for the terminal and send a RRC connection release message to the terminal containing redirection information.
